# EUROPÄISCHE PATENTSCHRIFT

(11) **EP 0 804 356 B1**
(45) Veröffentlichungstag und Bekanntmachung des Hinweises auf die Patenterteilung: **04.08.1999**
(21) Anmeldenummer: 96900315.1
(22) Anmeldetag: 11.01.1996
(51) Int. Cl.: B60S 1/34

(54) **WISCHARM FÜR EINE HUBGESTEUERTE SCHEIBENWISCHVORRICHTUNG**
WIPER ARM FOR A LIFT-CONTROLLED WINDSCREEN WIPER DEVICE
BRAS DE MONTURE D'ESSUIE-GLACE POUR SYSTEME D'ESSUIE-GLACE COMMANDE PAR LEVEE

(30) Priorität: 17.01.1995 DE 19501211
(43) Veröffentlichungstag der Anmeldung: 05.11.1997
(73) Patentinhaber: ITT Automotive Europe GmbH, 60488 Frankfurt (DE)
(72) Erfinder: SCHAEL, Oliver, D-71706 Markgröningen (DE); ORTALE, Alessandro, D-74243 Langenbrettach (DE); KÖHLER, Manfred, D-74321 Bietigheim-Bissingen (DE)
(74) Vertreter: Dreiss, Fuhlendorf, Steimle & Becker
(86) Internationale Anmeldenummer: EP9600104
(87) Internationale Veröffentlichungsnummer: WO9622204

(56) Entgegenhaltungen:
- EP-A- 0 058 278
- EP-A- 0 537 059
- DE-A- 3 926 714
- DE-A- 4 307 994
- DE-C- 4 032 762

## Beschreibung

Die Erfindung betrifft einen Wischarm für eine hubgesteuerte Scheibenwischvorrichtung, insbesondere eines Kraftfahrzeuges, mit den Merkmalen des Oberbegriffs des Anspruchs 1.

Ein solcher Wischarm ist beispielweise bereits aus der EP-A-0 537 059 bekannt. Dieser Wischarm für eine hubgesteuerte Scheibenwischervorrichtung eines Kraftfahrzeuges weist eine im wesentlichen parallel zu der Scheibe bewegbare, längliche Koppel als Bestandteil einer die Hubsteuerung bewirkenden Vielgelenkanordnung auf. An der Koppel ist ein Gelenkteil in Richtung auf die zu reinigende Scheibe schwenkbar angelenkt, mit welchem ein Wischblatt verbindbar ist, wobei eine Anpreßfeder zum Anpressen des Wischblattes an die zu reinigende Scheibe mit dem Gelenkteil und der Koppel wirkverbunden ist. In einem Abstand voneinander sind als weitere Bestandteile der Vielgelenkanordnung ein Antriebshebel und ein Steuerhebel im wesentlichen in der Bewegungsebene der Koppel angelenkt. Die Koppel weist einen profilierten Querschnitt auf, und der Antriebshebel bzw. der Steuerhebel ist innerhalb der Höhe der Koppel schwenkbar mit dieser verbunden. Die Koppel ist hierbei als Druckguß- oder Spritzgußformteil hergestellt und besitzt aus Stabilitätsgründen relativ große Querschnitte, insbesondere auch in Richtung einer unerwünscht großen Bauhöhe.

Aufgabe der Erfindung ist es, einen Wischarm der eingangs beschriebenen Art so weiterzubilden, daß er eine geringe Bauhöhe aufweist und einfach bzw. kostengünstig herstellbar ist.

Diese Aufgabe wird durch einen Wischarm mit den Merkmalen des Anspruchs 1 gelöst. Die Erfindung geht dabei von dem Grundgedanken aus, die Blechbearbeitungstechnik bei der Herstellung eines durch ein Vielgelenk hubgesteuerten Wischarmes vorteilhaft anzuwenden. Dementsprechend ist die zu dem Wischarm gehörende Koppel einer Vielgelenkanordnung als Blechformteil hergestellt und besitzt einen U-artigen Querschnitt mit einem Rücken und zwei parallelen Schenkeln, wobei die beiden Schenkel eine untere, der zu reinigenden Scheibe zugewandte Wand und eine obere, von der zu reinigenden Scheibe abgewandte Wand und der Rücken eine schmale Längsseite der Koppel bilden. Der Antriebshebel und der Steuerhebel tauchen jeweils mit einem Endabschnitt an der offenen Schmalseite der Koppel zwischen die gegenüberliegenden Wände ein und sind mittels eines Gelenkbolzens oder Gelenkzapfen schwenkbar in den gegenüberliegenden Wänden der Koppel gelagert.

Eine derartig ausgebildete Koppel verfügt aufgrund des beschriebenen profilierten Querschnittes zum einen über die erforderliche Festigkeit bzw. Steifigkeit und ermöglicht zum anderen, daß der Antriebshebel bzw. der Steuerhebel innerhalb der Höhe des profilierten Querschnittes an der Koppel anlenkbar ist, so daß dadurch die Bauhöhe des Wischarmes in diesen Bereichen durch die schwenkbare Verbindung nicht über das Maß der Höhe des profilierten Querschnittes der Koppel vergrößert wird. Derartig geringe Bauhöhen werden deshalb angestrebt, weil der Wischarm zumeist in einem Spalt zwischen der zu reinigenden Scheibe und der Motorhaube angeordnet ist und dieser Spalt aus verschiedenen Gründen möglichst gering gehalten werden soll. Der Wischarm ist dabei an der Karosserie des Fahrzeuges bzw. an einer mit der Karosserie verbundenen Trägervorrichtung derart befestigt, daß das freie Ende des Antriebshebels mit einer pendelnd um ihre Achse antreibbaren Wischerwelle drehfest verbunden ist. Der Steuerhebel ist mit seinem freien Ende direkt mit einer drehbar gelagerten Steuerachse oder mit einem anderen Getriebeelement der Vielgelenkanordnung schwenkbar verbunden. Dadurch wird erreicht, daß der Wischarm beim Betrieb zusätzlich zu seiner pendelnden Schwenkbewegung zur günstigeren Gestaltung des Wischfeldes zusätzlich eine gesteuerte Hubbewegung in Längsrichtung des Wischarmes ausführt.

Zur Herstellung der Koppel sind verschiedene Blechmaterialien verwendbar. Es wird jedoch eine Ausführung gemäß Anspruch 2 bevorzugt, wonach die Koppel als Stanz-Biege-Formteil aus Stahlblech hergestellt ist. Gegenüber der Herstellung der Koppel aus beispielsweise Aluminiumblech tritt hierbei der bedeutende Vorteil ein, daß insbesondere durch wesentlich höhere Standzeiten der Stanz- bzw. Biegewerkzeuge die Fertigung wesentlich kostengünstiger erfolgen kann. Zum anderen besitzt Stahlblech günstigere Festigkeitseigenschaften und ist außerdem billiger als Aluminiumblech.

Dadurch, daß die schwenkbare Lagerung von Antriebshebel bzw. Steuerhebel gleichzeitig in beiden gegenüberliegenden Wänden erfolgt, ist bereits eine stabile Lagerung und außerdem eine gute Führung der Koppel am Antriebshebel bzw. Steuerhebel erzielbar. Diese Vorteile werden noch weiter verstärkt, wenn dabei gemäß Anspruch 3 die Lagerung des Antriebshebels bzw. Steuerhebels mittels eines Gelenkbolzens erfolgt, der drehbar in fluchtenden Löchern der gegenüberliegenden Wände der Koppel und dabei gleichzeitig unverdrehbar und axial gesichert in einem Loch am Ende des Antriebshebels bzw. Steuerhebels angeordnet ist. Vorzugsweise ist der Gelenkbolzen in Form einer Preßpassung in dem Loch am Ende des Antriebshebels bzw. Steuerhebels, welches mit den Löchern in den gegenüberliegenden Wänden der Koppel fluchtet, angeordnet.

Eine vorteilhafte Ausgestaltung gemäß Anspruch 4 sieht außerdem vor, daß ein Einlageteil mit angeformter Lagerbuchse verwendet wird. Das Einlageteil wird so zwischen den Innenseiten der Koppel und dem Antriebshebel bzw. Steuerhebel angeordnet, daß in den fluchtenden Löchern der gegenüberliegenden Wände der Koppel eine Lagerbuchse angeordnet ist, in der wiederum der Gelenkbolzen drehbar gelagert ist. Durch diese Maßnahme wird ein frühzeitiger Verschleiß der Lagerteile vermieden und außerdem wird erreicht, daß der Antriebs- bzw. Steuerhebel nicht an den entsprechenden Stellen der Koppel reiben kann. Damit wird außerdem unerwünschte Korrosion im Lagerbereich vermieden.

Bei Anwendung einer vorteilhaften Ausgestaltung gemäß Anspruch 5 wird zwar eine geringfügige Vergrößerung der Bauhöhe im Lagerbereich herbeigeführt, andererseits ist damit aber neben einer verbesserten ästhetischen Gestaltung ein Schutz der Lagerstelle gegen Eindringen von Schmutz und aggressiven Medien von der Außenseite der Koppel her erreichbar.

Wenn gemäß einer vorteilhaften Ausgestaltung nach Anspruch 6 unmittelbar in die der zu reinigenden Scheibe zugewandte Wand der Koppel eine Öffnung zum Einhängen der Anpreßfeder bzw. eines mit der Anpreßfeder verbundenen C-Bügels eingebracht ist, kann auf andere Einhängemittel für die Anpreßfeder verzichtet werden. Die vorgesehene Öffnung ist in vorteilhafter Weise gemeinsam mit einem ohnehin durchzuführenden Stanzvorgang bei der Herstellung der Koppel herstellbar. Das Montieren eines gesonderten Federeinhängestiftes zwischen zwei parallelen, auf die zu reinigende Scheibe gerichteten Führungswänden der Koppel, an denen das Gelenkteil gelagert ist, kann somit verzichtet werden.

Eine vorteilhafte Ausgestaltung der Koppel nach Anspruch 7, wonach die obere Wand der Koppel an der offenen Längsseite die untere Wand überragt und zumindest annähernd bogenförmig ausgebildet ist, ist zum einen auf einen vorteilhaften ästhetischen Anblick des Wischarmes gerichtet und soll zum anderen ein Einklemmen der Finger bei einem eventuellen Eingriff in den in Betrieb befindlichen Wischarm verhindern.

Im Hinblick auf die Erzielung einer möglichst geringen Bauhöhe und außerdem eines abgerundeten Gesamteindruckes des Wischarmes wird eine Ausgestaltung gemäß Anspruch 8 empfohlen, wonach neben der Koppel auch der Antriebshebel bzw. der Steuerhebel als Blechformteil, insbesondere als Stanz-Biege-Formteil kostengünstig hergestellt ist. Entsprechend den jeweiligen Bedingungen, insbesondere in Anpassung an die Art der Koppel, können dabei die Hebel aus Aluminiumblech oder aus Stahlblech bestehen. Entsprechend einer Ausgestaltung gemäß Anspruch 9 kann der Antriebshebel bzw. Steuerhebel ein massives Stahlblechteil mit zumindest annähernd rechteckigem Querschnitt sein. Vorteilhaft ist auch eine Ausgestaltung gemäß Anspruch 10, wobei der Antriebshebel bzw. der Steuerhebel zwischen seinen gegenüberliegenden Endabschnitten einen flachen profilierten Querschnitt besitzt. Dadurch kann bei minimierter Materialdicke der Hebel sowohl deren erforderliche Stabilität bzw. Steifigkeit als auch die gewünschte geringe Bauhöhe der Scheibenwischvorrichtung gewährleistet werden. In Ergänzung hierzu wird empfohlen, eine Ausgestaltung gemäß Anspruch 11 anzuwenden, wonach die Querschnittsform der Hebel in bezug auf die zu reinigende Scheibe im wesentlichen konkav ausgebildet ist. Das wirkt sich einerseits vorteilhaft auf die Strömungsverhältnisse hinsichtlich des anströmenden Fahrtwindes aus und verschafft andererseits einen besseren optischen Eindruck beim Anblick der Scheibenwischvorrichtung. Um bei Verwendung von relativ dünnem Stahlblech für die Herstellung eines Antriebshebels oder Steuerhebels den mit der Koppel zu verbindenden Endabschnitt und eventuell auch den gegenüberliegenden Endabschnitt mit einer für eine sichere Verbindung erforderlichen Materialdicke auszustatten, ist hier das Stahlblech einmal oder mehrfach aufeinandergefaltet.

Wenn nun noch eine Minimierung des erforderlichen Materialeinsatzes bzw. des Gewichtes des Wischarmes erfolgen soll, wird eine Ausgestaltung gemäß Anspruch 13 empfohlen, wonach der Antriebshebel bzw. der Steuerhebel an mechanisch wenig beanspruchten Stellen mit flächenhaften Durchbrüchen versehen ist. Voraussetzung hierfür ist, daß die Durchbrüche so angebracht werden, daß die Festigkeit und die Funktionsfähigkeit der Hebel dadurch nicht beeinträchtigt wird.

Anhand mehrerer Ausführungsbeispiele wird die Erfindung nachstehend näher beschrieben. In den zugehörigen Zeichnungen zeigen:
- Fig. 1: die Draufsicht eines hubgesteuerten Wischarmes,
- Fig. 2: eine Ansicht des Wischarmes von Fig. 1 in Richtung des Pfeiles II,
- Fig. 3: eine Ansicht des Wischarmes von Fig. 2 in Richtung des Pfeiles III,
- Fig. 4: eine Schnittdarstellung entlang der Linie IV-IV in Fig. 1,
- Fig. 5: einen Abschnitt einer Koppel mit Öffnung zum Einhängen der Anpreßfeder, in Schnittdarstellung,
- Fig. 6: eine Draufsicht eines Abschnittes einer Koppel mit Öffnung zum Einhängen der Anpreßfeder,
- Fig. 7: ein Ausführungsbeispiel eines Antriebshebels bzw. Steuerhebels,
- Fig. 8: ein anderes Ausführungsbeispiel eines Antriebshebels bzw. Steuerhebels.
- Fig. 9: ein Ausführungsbeispiel für den Querschnitt eines Antriebshebels bzw. Steuerhebels und
- Fig. 10: ein anderes Ausführungsbeispiel für den Querschnitt eines Antriebshebels bzw. Steuerhebels.

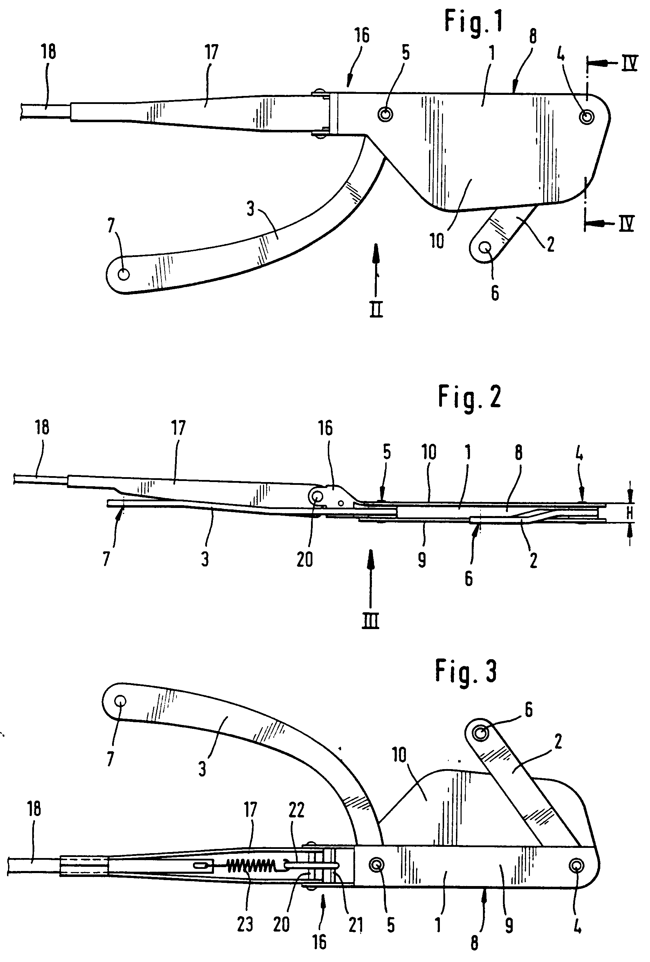

In den Fig. 1 bis 3 ist eine empfohlene Variante eines Wischarmes mit einem Viergelenk als Hubsteuerung dargestellt. Die Stellung des Wischarmes in Fig. 1 entspricht etwa derjenigen Stellung, die der Wischarm am Fahrzeug in einer zum unteren Scheibenrand etwa parallelen Parkstellung einnimmt. Die zu dem Wischarm gehörende Viergelenkanordnung besteht dabei aus der Koppel 1, dem Antriebshebel 2 und dem Steuerhebel 3. In einem Abstand voneinander sind der Antriebshebel 2 über ein Schwenklager 4 und der Steuerhebel 3 über ein Schwenklager 5 mit der Koppel verbunden. Der Antriebshebel 2 besitzt an seinem freien Ende eine, insbesondere kegelige, Öffnung 6, mit welcher er drehfest auf einer pendelnd antreibbaren Wischerwelle zu befestigen ist. Die Wischerwelle ist dabei in einem karosseriefesten Lager gelagert. Analog dazu ist der Steuerhebel 3 mit einer Öffnung 7 in seinem freien Ende an einer Steuerachse befestigt, welche in einem karosseriefesten Lager drehbar gelagert ist. Die Wischerwelle und die Steuerachse sind in den Fig. 1 bis 3 nicht dargestellt, sie würden jedoch jeweils an der Position angeordnet sein, in welcher sich die Öffnung 6 bzw. 7 befindet.

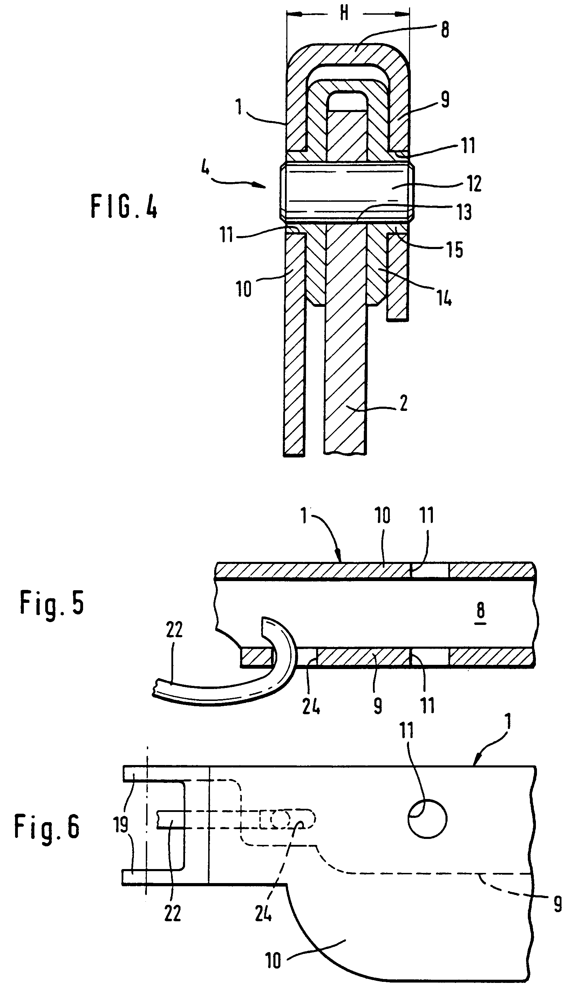

Die Koppel 1 ist im vorliegenden Fall als Stanz-Biege-Formteil aus Stahlblech hergestellt und hat, wie insbesondere aus Fig. 4 ersichtlich, im wesentlichen ein U-artiges Profil mit einem relativ schmalen Rücken und zwei senkrecht vom Rücken abstehenden und zueinander parallelen Schenkeln. Der Rücken der Koppel bildet die geschlossene schmale Längsseite 8, welche bei Parkstellung des Wischarmes am unteren Scheibenrand (Fig. 1) zum oberen Scheibenrand weist. Der in Fig. 4 rechte Schenkel des Koppelquerschnittes bildet die der zu reinigenden Scheibe zugewandte, untere Wand 9 der Koppel und der in Fig. 4 linke Schenkel des Koppelquerschnittes bildet die von der zu reinigenden Scheibe abgewandte, obere Wand 10 der Koppel 1.

Wie aus Fig. 4 ersichtlich ist, wird das Schwenklager 4 zwischen Koppel 1 und Antriebshebel 2 von in den gegenüberliegenden Wänden 9 und 10 der Koppel 1 befindlichen fluchtenden Löchern 11 gebildet, in denen der Gelenkbolzen 12 drehbar gelagert ist, welcher in ein Loch 13 am Ende des Antriebshebels 2 eingepreßt ist. Aufgrund des Preßsitzes ist der Gelenkbolzen 12 drehfest und axial gesichert am Antriebshebel 2 befestigt. In einem Abstand zwischen dem Antriebshebel 2 und den Innenseiten der Koppel 1 ist ein Einlageteil 14 angeordnet, welches mit angeformten Lagerbuchsen 15 in die fluchtenden Löcher 11 der Wände 9 und 10 eingreift. Das Einlageteil 14 ist dabei zumindest weitgehend unverdrehbar gegenüber der Koppel 1 gelagert, und der Gelenkbolzen 12 ist drehbar in den Lagerbuchsen 15 des Einlageteils 14 angeordnet. Beim Betrieb des Scheibenwischers erfolgt eine relative Lagerbewegung zwischen dem Antriebshebel 2 und dem Einlageteil 14 bzw. zwischen dem Gelenkbolzen 12 und den Lagerbuchsen 15. Eine unmittelbare Berührung von Antriebshebel 2 und Koppel 1 wird dadurch vermieden, wodurch eine Beschädigung der entsprechenden Oberflächen und damit verbundene Korrosion vermieden wird. Das Schwenklager 5 zwischen Koppel 1 und Steuerhebel 3 ist ananlog zu dem Schwenklager 4 zwischen Koppel 1 und Antriebshebel 2 aufgebaut. Ebenso wäre es möglich, dem jetzigen Steuerhebel 3 die Funktion eines Antriebshebels und dem jetzigen Antriebshebel 2 die Funktion eines Steuerhebels zuzuordnen.

Aus den Fig. 1 bis 4 ist noch ersichtlich, daß die der zu reinigenden Scheibe abgewandte, obere Wand 10 der Koppel 1 an der offenen Längsseite der Koppel 1 deren untere Wand 9 überragt und dabei zumindest annähernd mit einer nach auswärts versehenen Bogenform ausgebildet ist. Mit diesem Merkmal werden zwei verschiedene Ziele verfolgt. Zum einen soll dadurch der Vorrichtung insgesamt ein ansprechendes Erscheinungsbild verliehen werden. Andererseits soll verhindert werden, daß bei einem eventuellen Eingriff einer Person in eine in Betrieb befindliche Scheibenwischeranlage deren Finger zwischen dem Antriebshebel 2 beziehungsweise Steuerhebel 3 und der offenen Längsseite der Koppel 1 eingeklemmt werden können. Der bogenförmige Rand der oberen Wand 10 dient dabei gewissermaßen als Abweiser.

Der Antriebshebel 2 und der Steuerhebel 3 tauchen jeweils mit einem Ende an der offenen Längsseite der Koppel 1 zwischen die gegenüberliegenden Wände 9 und 10 ein und sind auch zwischen diesen gelagert (Fig. 4). Daraus ergibt sich der besondere Vorteil, daß durch die Ineinanderschachtelung der verbundenen Teile im Bereich der Schwenklager 4 und 5 die Bauhöhe nicht vergrößert wird. Die Bauhöhe wird im wesentlichen durch die Höhe H des Querschnittsprofiles der Koppel 1 bestimmt.

Der Betrag, um welchen die Lagerzapfen 15 beziehungsweise die Gelenkbolzen 12 an den Außenseiten der Wände 9 und 10 eventuell hervorstehen, ist dabei vernachlässigbar. Durch die Verwendung eines U-artigen Querschnittsprofiles der Koppel wird die für deren Funktion erforderliche Festigkeit bzw. Steifigkeit gewährleistet. Um fertigungsbedingte Verspannungen bzw. Verwerfungen in der oberen Wand 10 zu vermeiden, könnte an der offenen Längsseite der Koppel in die Wand 10 eine dem Verlauf ihres Randes folgende Sicke oder dergleichen eingebracht werden.

Aus den Fig. 1 bis 3 ist noch ersichtlich, daß das in diesen Figuren linke Ende der Koppel 1 als Anschlußkopf 16 für das Gelenkteil 17 ausgebildet ist, wobei das Gelenkteil 17 eine Wischstange 18 trägt, an welcher ein Wischblatt anlenkbar ist. Die Art der Wischstange und des Wischblattes ist für die vorliegende Erfindung nicht von Bedeutung, weshalb diese in der Zeichnung auch nicht bzw. nicht vollständig dargestellt sind. Der Anschlußkopf 16 besteht im wesentlichen aus zwei parallelen Führungswangen, die rechtwinklig zu den Wänden 9 und 10 der Koppel 1 angeordnet sind. Bei anderen Ausführungen von Wischarmen könnte es auch sein, daß die Führungswange 19 in einem vom rechten Winkel abweichenden Winkel zu den Wänden 9 und 10 der Koppel angeordnet sind. An den Führungswänden 19 ist in ansich bekannter Weise das Gelenkteil 17 mit Hilfe eines Gelenkbolzens 20 angelenkt, der in fluchtenden Bohrungen der Führungswangen angeordnet und vorzugsweise an deren Außenseiten vernietet ist. Weiterhin ist in den Führungswangen 19 ein Federeinhängestift 21 gehalten, an den unter Verwendung eines C-Bügels 22 die Anpreßfeder 23 eingehängt ist. Das andere Ende der Anpreßfeder 23 ist in ein Loch am Ende der Wischstange 18 eingehängt (Fig. 3).

Aus den Fig. 5 und 6 ist eine besonders einfache und kostengünstig herstellbare Variante für das Einhängen der Anpreßfeder 23 bzw. des C-Bügels 22 an der Koppel 1 ersichtlich. In Fig. 5 sind die schmale Längsseite 8, die untere Wand 9 und die obere Wand 10 der im wesentlichen einen U-artigen Querschnitt aufweisenden Koppel 1 zu erkennen. In der oberen Wand 10 und der unteren Wand 9 sind die fluchtenden Löcher 11 für die Aufnahme eines Gelenkbolzens zum Anlenken eines Antriebshebels 2 bzw. Steuerhebels 3 vorhanden. In der Nähe des linken Randes der unteren Wand 9 ist eine langlochförmige ausgestanzte Öffnung 24 zu erkennen, in welche von unten her der C-Bügel 22 mit seinem hakenförmigen Ende eingehängt ist. Das andere, nicht dargestellte Ende des C-Bügels ist in ansich bekannter Weise mit dem koppelseitigen Ende der Anpreßfeder 23 (Fig. 3) verbunden.

In Fig. 6 ist der Verlauf des Randes der unteren Wand 9 im Bereich der Öffnung 24 zum Einhängen des C-Bügels 22 zu erkennen. Außerdem sind noch die bereits beschriebenen Führungswangen 19 zum schwenkbaren Anlenken des Gelenkteiles 17 zu sehen.

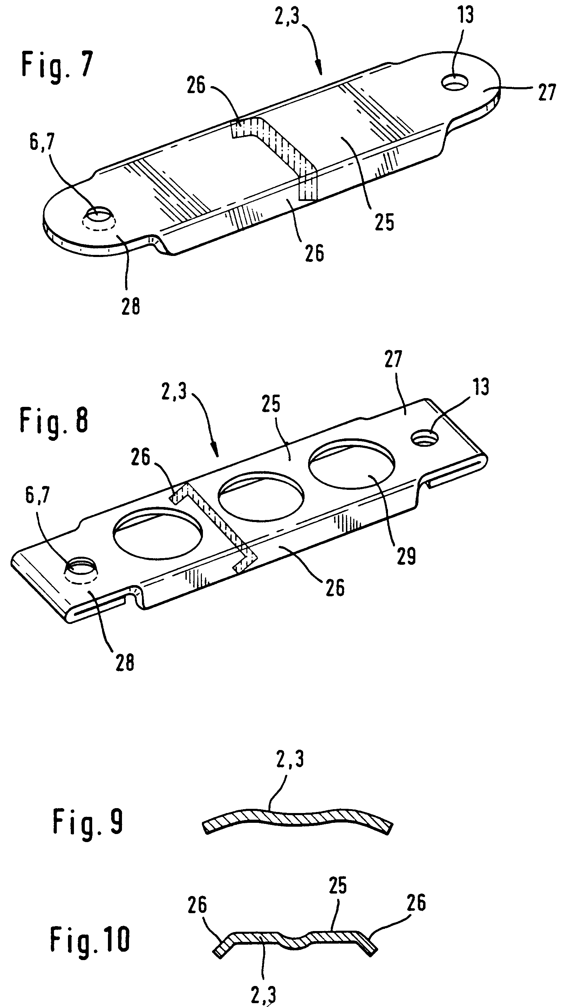

Fig. 7 zeigt eine Version eines Antriebshebels 2 beziehungsweise Steuerhebels 3, der aus Aluminiumblech hergestellt ist. Der Antriebshebel 2 bzw. Steuerhebel 3 besitzt zwischen seinen gegenüberliegenden Endabschnitten 27, 28 einen flachen, profilierten Querschnitt, der in bezug auf die zu reinigende Scheibe konkav ausgebildet ist. Der Rücken 25 ist eben, und an den Längsseiten des Antriebshebels 2 bzw. Steuerhebels 3 ist ein schmaler Rand 26 mit einem Winkel kleiner als 90° in Richtung auf die zu reinigende Scheibe umgebogen. Die umgebogenen Ränder 26, die in diesem Fall nicht rechtwinklig zum Rücken 25 verlaufen, verleihen dem Antriebshebel 2 bzw. Steuerhebel 3 die erforderliche Stabilität. In den gegenüberliegenden Endabschnitten 27 und 28 ist die Materialstärke ausreichend dick, um eine sichere Verbindung mit der Koppel 1 einerseits und eine sichere Befestigung an der Wischerwelle bzw. Steuerachse andererseits zu gewährleisten. In den Endabschnitt 27 ist das Loch 13 eingebracht, welches gegenüber dem Gelenkbolzen 12 einen kleineren Durchmesser besitzt, um einen Preßsitz auf dem Umfang des Gelenkbolzens 12 zu erreichen. Der andere Endabschnitt 28 ist mit einer Öffnung 6 beziehungsweise 7 zur Befestigung auf der Wischerwelle bzw. Steuerachse ausgestattet. Vorzugsweise wird diese Öffnung 6 bzw. 7 kegelig ausgebildet sein, um drehfest mit einem ebenfalls kegeligen Endabschnitt der Wischerwelle bzw. der Steuerachse verbunden zu werden.

Fig. 8 zeigt eine Version eines Antriebshebels 2 bzw. Steuerhebels 3, der aus relativ dünnem Stahlblech als Stanz-Biege-Formteil hergestellt ist. Der hier gezeigte Antriebshebel 2 bzw. Steuerhebel 3 besitzt wiederum einen flachen, profilierten, in bezug auf die zu reinigende Scheibe konkaven Querschnitt, bei dem an den Längsseiten des ebenen Rükkens 25 jeweils ein schmaler Rand 26 rechtwinklig in Richtung auf die zu reinigende Scheibe umgebogen ist. Um diesen Antriebshebel 2 beziehungsweise Steuerhebel 3 sicher mit der Koppel 1 beziehungsweise einer Wischerwelle oder Steuerachse verbinden zu können, ist in den gegenüberliegenden Endabschnitten 27 bzw. 28 das Stahlblech aufeinandergefaltet. Durch diese Maßnahme wird für die erforderliche Materialdicke gesorgt. Der Endabschnitt 27 trägt wiederum ein Loch 13 zum Einpressen eines Gelenkbolzens 12, und in den gegenüberliegenden Endabschnitt 28 ist wiederum eine, insbesondere kegelige, Öffnung 6 beziehungsweise 7 zur Befestigung auf einer Wischerwelle beziehungsweise Steuerachse eingebracht. Es ist noch zu erkennen, daß in den Rücken 25 flächenhafte Durchbrüche 29 eingebracht sind, welche für eine Materialminimierung beziehungsweise Gewichtsverringerung des Antriebshebels 2 beziehungsweise Steuerhebels 3 vorgesehen sind. Diese flächenhaften Durchbrüche 29 sind an mechanisch wenig belasteten Stellen eingebracht, um die Steifigkeit beziehungsweise Stabilität des Antriebshebels 2 beziehungsweise Steuerhebels 3 nicht zu verringern. Da der hier gezeigte Antriebshebel 2 bzw. Steuerhebel 3 bereits aus ziemlich dünnem Stahlblech besteht ist das Einbringen der flächenhaften Durchbrüche 29 in diesem Fall nicht so günstig, da es doch zu einer ungewollten Verringerung der Festigkeit bzw. Steifigkeit führen kann. Diese Maßnahme ist insbesondere von Vorteil bei der Ausbildung des Antriebshebels 2 bzw. Steuerhebels 3 als massives Stanzteil gemäß Anspruch 10.

In den Figuren 9 und 10 sind zwei weitere Ausführungsbeispiele für die Gestaltung der Querschnittsform eines Antriebshebels 2 oder Steuerhebels 3 gezeigt, die vorteilhaft bei Verwendung von dünnem Blech für die Hebel sind. Die gezeigte flache Profilierung des Querschnittes erhöht die Stabilität bzw. Steifigkeit gegenüber einem ebenen Gebilde und gewährleistet trotzdem eine erwünschte geringe Bauhöhe von Antriebshebel 2 und Steuerhebel 3. Der Querschnitt in Fig. 9 zeigt verschiedene gegenläufige Biegungen, und bei dem Querschnitt in Fig. 10 sind von einem an sich ebenen Rücken 25 die Ränder 26 leicht nach unten, d. h. in Richtung auf die zu reinigende Scheibe, gebogen. Mittig ist in den Rücken 25 eine Vertiefung eingedrückt. Obwohl die Querschnitte in Figur 9 und 10 mittig einen nach unten konvexen Bereich aufweisen, können sie doch insgesamt als nach unten konkav angesehen werden. Die in den Figuren 7 bis 10 gezeigten Querschnittsformen sollen keine Beschränkung darstellen, es sind durchaus weitere vorteilhafte Querschnittsformen denkbar, insbesondere auch solche, die über die Breite des Querschnitts wesentlich mehr aber dafür kleinere Wellen oder Biegungen oder dergleichen aufweisen.

Die Funktion eines erfindungsgemäßen Wischarmes ist bereits hinreichend bekannt. Beim Betrieb der Scheibenwischvorrichtung wird die Viergelenkanordnung und damit die Koppel 1 im wesentlichen in einer zu der zu reinigenden Scheibe parallelen Ebene verschwenkt. Dabei wird der normalen Schwenkbewegung des Wischarmes durch die Wirkung der Viergelenkanordnung eine zusätzliche Bewegung in Längsrichtung des Wischarmes überlagert. Damit wird eine zielgerichtete Vergrößerung des Wischfeldes erreicht.

### Bezugszeichenliste:

- 1: Koppel
- 2: Antriebshebel
- 3: Steuerhebel
- 4: Schwenklager
- 5: Schwenklager
- 6: Öffnung
- 7: Öffnung
- 8: Längsseite
- 9: Wand
- 10: Wand
- 11: Loch
- 12: Gelenkbolzen
- 13: Loch
- 14: Einlageteil
- 15: Lagerbuchse
- 16: Anschlußkopf
- 17: Gelenkteil
- 18: Wischstange
- 19: Führungswange
- 20: Gelenkbolzen
- 21: Federeinhängestift
- 22: C-Bügel
- 23: Anpreßfeder
- 24: Öffnung
- 25: Rücken
- 26: Rand
- 27: Endabschnitt
- 28: Endabschnitt
- 29: Durchbruch
- H: Höhe

## Patentansprüche

1. Wischarm für eine hubgesteuerte Scheibenwischvorrichtung, insbesondere eines Kraftfahrzeuges, der eine im wesentlichen parallel zu der zu reinigenden Scheibe bewegbare, längliche Koppel (1) als Bestandteil einer die Hubsteuerung bewirkenden Vielgelenkanordnung aufweist, an der ein Gelenkteil (17) in Richtung auf die zu reinigende Scheibe schwenkbar angelenkt ist, mit welchem direkt oder über eine Wischstange (18) ein Wischblatt verbindbar ist, wobei eine Anpreßfeder (23) zum Anpressen des Wischblattes an die zu reinigende Scheibe mit dem Gelenkteil (17) und der Koppel (1) wirkverbunden ist, und an der in einem Abstand voneinander als weitere Bestandteile der Vielgelenkanordnung ein Antriebshebel (2) und ein Steuerhebel (3) im wesentlichen in der Bewegungsebene der Koppel (1) schwenkbar angelenkt sind, **dadurch gekennzeichnet,** daß die Koppel (1) ein Blech-Formteil ist und im wesentlichen einen U-artigen Querschnitt mit einem Rücken und zwei parallelen Schenkeln besitzt, wobei die beiden Schenkel eine untere, der zu reinigenden Scheibe zugewandte Wand (9) und eine obere, von der zu reinigenden Scheibe abgewandte Wand (10) und der Rücken eine schmale Längsseite (8) der Koppel (1) bilden, und daß der Antriebshebel (2) und der Steuerhebel (3) jeweils mit einem Endabschnitt (27) an der offenen Schmalseite der Koppel (1) zwischen die gegenüberliegenden Wände (9, 10) eintauchen und mittels eines Gelenkbolzens (12) oder Gelenkzapfen schwenkbar in den gegenüberliegenden Wänden (9, 10) der Koppel (1) gelagert sind.

2. Wischarm nach Anspruch 1, **dadurch gekennzeichnet,** daß die Koppel (1) ein Stanz-Biege-Formteil aus Stahlblech ist.

3. Wischarm nach einem der vorhergehenden Ansprüche 2, **dadurch gekennzeichnet,** daß der Antriebshebel (2) und/oder der Steuerhebel (3) jeweils mittels eines Gelenkbolzens (12) an der Koppel (1) gelagert ist, der drehbar in fluchtenden Löchern (11) der gegenüberliegenden Wände (9, 10) der Koppel und dabei, vorzugsweise mittels einer Preßpassung, axial gesichert und unverdrehbar in einem mit den Löchern (11) in den Wänden (9, 10) fluchtenden Loch (13) in dem Endabschnitt (27) des Antriebshebels (2) beziehungsweise Steuerhebels (3) angeordnet ist.

4. Wischarm nach einem der vorhergehenden **dadurch gekennzeichnet,** daß ein Einlageteil (14) mit angeformter Lagerbuchse (15), welche in dem Loch (11) der Wand (9, 10) der Koppel (1) angeordnet ist und in welcher der Gelenkbolzen (12) bzw. Lagerzapfen drehbar gelagert ist, zwischen der Koppel (1) und dem Antriebshebel (2) bzw. Steuerhebel (3), vorzugsweise unverdrehbar gegenüber der Koppel (1), angeordnet ist.

5. Wischarm nach einem der verhergehenden Ansprüche, **dadurch gekennzeichnet,** daß das Loch (11) in der oberen Wand (10) der Koppel (1) als eine nach oben gerichtete Ausprägung hergestellt und damit materialschlüssig an der Oberseite der Wand (10) verschlossen ist.

6. Wischarm nach einem der verhergehenden Ansprüche, **dadurch gekennzeichnet, daß** die der zu reinigenden Scheibe zugewandte Wand (9) der Koppel (1) auf der dem Gelenkteil (17) gegenüberliegenden Seite des Schwenklagers von Koppel (1) und Gelenkteil (17) eine Öffnung (24) zum Einhängen des koppelseitigen Endes der Anpreßfeder (23) bzw des mit dem koppelseitigen Ende der Anpreßfeder (23) verbundenen C-Bügels (22) aufweist.

7. Wischarm nach einem der verhergehenden Ansprüche, **dadurch gekennzeichnet,** daß die von der zu reinigenden Scheibe abgewandte Wand (10) der Koppel (1) an der offenen Längsseite der Koppel (1) die der zu reinigenden Scheibe zugewandte Wand (9) überragt und ihr Rand zumindest angenähert eine nach auswärts gerichtete Bogenform aufweist.

8. Wischarm nach einem der vorhergehenden Ansprüche, **dadurch gekennzeichnet,** daß der Antriebshebel (2) und/oder der Steuerhebel (3) als Blech-Formteil, insbesondere Stanz-Biege-Formteil, hergestellt ist.

9. Wischarm nach Anspruch 8, **dadurch gekennzeichnet,** daß der Antriebshebel (2) und/oder der Steuerhebel (3) ein massives Stanzteil mit zumindest annähernd rechteckigem Querschnitt ist.

10. Wischarm nach Anspruch 8, **dadurch gekennzeichnet,** daß der Antriebshebel (2) und/oder der Steuerhebel (3) zwischen seinen gegenüberliegenden Endabschnitten (27, 28) einen flachen, profilierten Querschnitt besitzt.

11. Wischarm nach Anspruch 10, **dadurch gekennzeichnet,** daß der Antriebshebel (2) und/oder der Steuerhebel (3) zwischen seinen gegenüberliegenden Endabschnitten (27, 28) eine in bezug auf die zu reinigende Scheibe im wesentlichen konkave Querschnittsform besitzt.

12. Wischarm nach einem der Ansprüche 8, 10 oder 11, **dadurch gekennzeichnet,** daß der Antriebshebel (2) und/oder der Steuerhebel (3) aus relativ dünnem Stahlblech gefertigt ist und daß in einem oder in beiden der Endabschnitte (27, 28) das Stahlblech einmal oder mehrfach aufeinandergefaltet ist.

13. Wischarm nach einem der Ansprüche 8 bis 11, **dadurch gekennzeichnet,** daß der Antriebshebel (2) und/oder der Steuerhebel (3) an mechanisch wenig beanspruchten Stellen mit flächenhaften Durchbrüchen (29) versehen ist.

## Claims

1. Wiper arm for a lift-controlled windscreen wiper device, in particular for an automotive vehicle, including an elongated coupling rod (1) which is movable generally in parallel to the window pane being cleaned and is a component part of a multiple joint assembly which performs the lift control, wherein a pivot part (17) is articulated at the multiple joint assembly so as to pivot in the direction of the window pane being cleaned, by which pivot part a wiper blade is connectable directly or by way of a wiper rod (18), wherein a contact spring (23) for pressing the wiper blade against the window pane being cleaned is operatively connected to the pivot part (17) and the coupling rod (1), and wherein as further component parts of the multiple joint assembly a drive lever (2) and a control lever (3), spaced from each other, are articulated so as to pivot generally in the plane of motion of the coupling rod (1), characterized in that the coupling rod (1) is a sheet-metal shaped part and has a generally U-type cross-section including a back and two parallel legs, the two legs forming a bottom wall (9) facing the window pane being cleaned and a top wall (10) averted from the window pane being cleaned, and the back forming a narrow longitudinal side (8) of the coupling rod (1), and in that at the open narrow side of the coupling rod (1), the drive lever (2) and the control lever (3), each with one end portion (27), extend between the two opposed walls (9, 10) of the coupling rod and are supported in the opposed walls (9, 10) of the coupling rod (1) so as to pivot by way of a pivot pin (12) or pivot journals.

2. Wiper arm as claimed in claim 1, characterized in that the coupling rod (1) is a press bending shaped part made of sheet steel.

3. Wiper arm as claimed in any one of the preceding claims, characterized in that the drive lever (2) and/or the control lever (3) is respectively supported on the coupling rod (1) by way of a pivot pin (12) which is mounted so as to be rotatable in aligned holes (11) of the opposed walls (9, 10) of the coupling rod and, is arranged, preferably by a press fit, in an axially secured and unrotatable manner, in a hole (13) in the end portion (27) of the drive lever (2) or the control lever (3), and hole (13) is in alignment with the holes (11) in the walls (9, 10).

4. Wiper arm as claimed in any one of the preceding claims, characterized in that an insert member (14) with a bearing bushing (15) which is arranged in the hole (11) of the wall (9, 10) of the coupling rod (1) and in which the pivot pin (12) or pivot journal is rotatably mounted, is interposed between the coupling rod (1) and the drive lever (2) or the control lever (3), preferably so as to be unrotatable with respect to the coupling rod (1).

5. Wiper arm as claimed in any one of the preceding claims, characterized in that the hole (11) in the top wall (10) of the coupling rod (1) is an upwardly directed recess, its material providing closure on the top side of the wall (10).

6. Wiper arm as claimed in any one of the preceding claims, characterized in that the wall (9) of the coupling rod (1) facing the window pane being cleaned includes an opening (24) on the side of the pivot bearing of coupling rod (1) and pivot part (17), which side is opposite the pivot part (17), the opening (24) being used to mount the coupling-rod-side end of the contact spring (23) or the C-shaped hook (22) which is connected to the end of the contact spring (23) close to the coupling rod.

7. Wiper arm as claimed in any one of the preceding claims, characterized in that the wall (10) of the coupling rod (1) averted from the window pane being cleaned projects above the wall (9) facing the window pane being cleaned at the open longitudinal side of the coupling rod (1), and its edge has an outwardly directed arcuate shape, at least in approximation.

8. Wiper arm as claimed in any one of the preceding claims, characterized in that the drive lever (2) and/or the control lever (3) is made as a sheet-metal shaped part, in particular a press bending shaped part.

9. Wiper arm as claimed in claim 8, characterized in that the drive lever (2) and/or the control lever (3) is a massive press part having an at least roughly rectangular cross-section.

10. Wiper arm as claimed in claim 8, characterized in that the drive lever (2) and/or the control lever (3) has a flat, profiled cross-section between its opposed end portions (27, 28).

11. Wiper arm as claimed in claim 10, characterized in that the drive lever (2) and/or the control lever (3), between the opposed end portions (27, 28) has a cross-sectional shape which is generally concave with respect to the window pane being cleaned.

12. Wiper arm as claimed in any one of claims 8, 10, 11, characterized in that the drive lever (2) and/or the control lever (3) is made of a relatively thin sheet steel, and in that the sheet steel is folded one time or several times in one or in both of the end portions (27, 28).

13. Wiper arm as claimed in any one of claims 8 to 11, characterized in that the drive lever (2) and/or the control lever (3) includes large-surface apertures (29) at points subjected to low mechanical stresses.

## Revendications

1. Bras de monture d'essuie-glace pour système d'essuie-glace commandé par levée, en particulier pour un véhicule automobile,ledit bras présentant comme élément d'un dispositif d'articulation à plusieurs points assurant la commande par levée,une pièce d'accouplement (1) de forme oblongue,mobile essentiellement parallèlement à la glace à racler et,sur laquelle une pièce d'articulation (17) est articulée d'une façon pivotante en direction de la glace à racler,laquelle pièce d'articulation(17) peut être reliée à un bras d'essuie-glace muni de sa raclette soit directement soit par une baguette d'essuie-glace (18), un ressort d'appui (23) étant relié d'une façon active à la pièce d'articulation (17) et à la pièce d'accouplement (1) pour le maintien en pression dudit bras d'essuie-glace sur la glace à racler, et sur laquelle pièce d'accouplement un levier d'entrainement (2) et un levier de commande (3) sont articulés d'une façon pivotante, en tant qu'éléments supplémentaires du dispositif d'articulation à plusieurs points,à distance l'un de l'autre,essentiellement dans le plan de mouvement de ladite pièce d'accouplement (1), caractérisé en ce que: la pièce d'accouplement (1) est une pièce formée en tôle et comprend essentiellement une section transversale de type U avec une face arrière et deux ailes latérales parallèles, lesdites ailes formant une paroi inférieure (9) située vers la glace à racler et une paroi supérieure (10) éloignée de la glace à racler,la face arrière formant un côté longitudinal (8) étroit de la pièce d'accouplement (1), et en ce que le levier d'entrainement (2) et le levier de commande (3) s'introduisent respectivement par une section d'extrémité (27) dans le côté étroit ouvert de la pièce d'accouplement (1) situé entre les parois opposées (9,10) et sont montés pivotants au moyen d'un axe d'articulation (12) ou d'un pivot dans les parois opposées (9,10) de la pièce d'accouplement (1).

2. Bras de monture d'essuie-glace selon la revendication 1, caractérisé en ce que la pièce d'accouplement (1) est une pièce en tôle d'acier,formée par pliage et estampage.

3. Bras de monture d'essuie-glace selon l'une quelconque des revendications précédentes, caractérisé en ce que le levier d'entrainement (2) et/ou le levier de commande (3) sont respectivement montés sur la pièce d'accouplement (1) au moyen d'un axe d'articulation (12),lequel est monté rotatif dans des trous alignés (11) des parois opposées (9,10) de la pièce d'accouplement (1) d'une part et,en même temps,de préférence au moyen d'un ajustement serré,est fixé axialement et non rotatif dans un trou (13) de la section d'extrémité (27) du levier d'entrainement (2) ou du levier de commande (3),aligné avec les trous (11) situés dans les parois (9,10).

4. Bras de monture d'essuie-glace selon l'une quelconque des revendications précédentes,caractérisé en ce qu'une pièce intermédiaire (14) est disposée,de préférence non rotative par rapport à la pièce d'accouplement (1), entre la pièce d'accouplement (1) et le levier d'entrainement (2) ou le levier de commande (3),avec une douille-palier (15) venue de matière qui est disposée dans un trou (11) de la paroi (9,10) de la pièce d'accouplement (1) et dans laquelle est logé tournant l'axe d'articulation (12) ou le tourillon.

5. Bras de monture d'essuie-glace selon l'une quelconque des revendications précédentes, caractérisé en ce que le trou (11) est réalisé dans la paroi (10) supérieure de la pièce d'accouplement (1) comme un poinçonnage orienté vers le haut et est verrouillé par conformation en contact avec le côté supérieur de la paroi (10).

6. Bras de monture d'essuie-glace selon l'une quelconque des revendications précédentes,caractérisé en ce que la paroi (9) de la pièce d'accouplement (1) située vers la glace à racler présente sur le côté opposé à la pièce d'articulation du palier d'articulation de la pièce d'accouplement (1) et de ladite pièce d'articulation (17),une ouverture (24) pour l'accrochage de l'extrémité côté pièce d'articulation (17),une ouverture (24) pour l'accrochage de l'extrémité côté pièce d'articulation du ressort d'appui (23) ou du crochet en C (22) de liaison avec cette extrémité du ressort (23).

7. Bras de monture d'essuie-glace selon l'une quelconque des revendications précédentes,caractérisé en ce que la paroi (10) de la pièce d'accouplement (1) opposée à la glace à racler dépasse de la paroi (9) située du côté de la glace à racler sur le coté longitudinal ouvert de la pièce d'accouplement (1),et son bord présente au moins d'une façon approchée,une forme voutée dirigée vers l'extérieur.

8. Bras de monture d'essuie-glace selon l'une quelconque des revendications précédentes,caractérisé en ce que le levier d'entrainement (2) et/ou le levier de commande (3) est fabriqué dans une tôle,en particulier formée par pliage et estampage.

9. Bras de monture d'essuie-glace selon la revendication 8, caractérisé en ce que le levier d'entrainement (2) et/ou le levier de commande (3) sont des pièces d'estampage massive avec au moins une section approximativement rectangulaire.

10. Bras de monture d'essuie-glace selon la revendication 8, caractérisé en ce que le levier d'entrainement (2) et/ou le levier de commande (3) possèdent un plat de section transversale profilée entre leurs régions d'extrémité (27,28) opposées.

11. Bras de monture d'essuie-glace selon la revendication 10, caractérisé en ce que le levier d'entrainement (2) et/ou le levier de commande (3) possèdent une forme en coupe transversale principalement concave entre leurs régions d'extrémité (27,28),en regard de la glace à racler.

12. Bras de monture d'essuie-glace selon l'une quelconque des revendications 8,10 ou 11,caractérisé en ce que le levier d'entrainement (2) et/ou le levier de commande (3) sont fabriqués en tôle d'acier relativement mince et en ce que la tôle d'acier est pliée sur elle-même une ou plusieurs fois dans une ou les deux régions d'extrémité .

13. Bras de monture d'essuie-glace selon l'une des revendications 8 à 11,caractérisé en ce que le levier d'entrainement (2) et/ou le levier de commande (3) sont pouvus de percements plats en des endroits faiblement sollicités mécaniquement.
